# EUROPEAN PATENT SPECIFICATION

(11) **EP 2 431 168 B1**
(45) Date of publication and mention of the grant of the patent: **01.05.2013**
(21) Application number: 10177752.2
(22) Date of filing: 20.09.2010
(51) Int. Cl.: B32B 5/00, B32B 7/14, A47C 27/00

(54) **Covering material**
Abdeckmaterial
Matériau de couverture

(43) Date of publication of application: 21.03.2012
(73) Proprietor: Bekaert Textiles N.V., 8790 Waregem (BE)
(72) Inventor: Van Thienen, Wim, 8790 Waregem (BE)
(74) Representative: Laenen, Bart Roger Albert

(56) References cited:
- EP-A1- 1 020 145
- EP-A1- 1 719 437
- WO-A1-2009/031028
- WO-A2-2009/053120
- DE-A1- 4 027 798
- US-A1- 2003 121 101

## Description

The invention relates generally to the use of covering materials for bedding articles that are moisture vapour permeable and liquid impermeable, and comprise a fabric that based on its intrinsic features, contributes to the functional characteristics of the covering material like, moisture vapour permeability, mechanical strength, machine wash-ability, flame resistance, and texture perception upon touch.

The use of the covering material as provided in_the present invention can find a variety of applications wherein moisture vapour permeability; liquid imperviousness; and comfort are desirable. A primary use relates to protect mattresses, particularly bed mattresses, but also pillows, cushions, duvets, or upholstery from contaminants, e.g. liquids or bodily fluids.

### BACKGROUND OF THE INVENTION

Covering materials for mattresses and the like have been known for a considerable time and are designed to protect them from liquids which may be accidentally spilled on the mattress or on the mattress cover. Such covering materials are particularly relevant in environments where a mattress is used by different users, such as in hospitals, hotels, nursery homes, hotels, rental houses or home care.

Mattress covers come in direct or indirect (i.e. through further intermediate layers, e.g. bed sheets, or pillowcases) contact with the human body, therefore it is important that such covers are moisture vapour permeable for comfort reasons, in addition to being liquid impermeable in order to provide the mattress with the desired protection against external agents. Various examples of mattress covers which are at the same time liquid impermeable and breathable, i.e. moisture vapour permeable, are known in the art.

Known mattress covers, such as for example described in US 2003/0211101 are composed of two layers, the first layer being made of flat knitwear to which a waterproof thermoplastic (second layer), in particular polyurethane, is applied. In this embodiment, the flat knitwear is the support layer, as it were, for the polyurethane coating which is intended, on the one hand, to prevent water from penetrating the covering material and, on the other hand, allow a limited amount of water vapour through. The water vapour permeability of this covering material is typically approximately 1000 g/m²/24h, measured using the ASTM-E96-66 standard. The polyurethane coating used in these art known mattress covers is typically water or solvent based. Given the difficulty to have a uniform and homogeneous distribution of such an aqueous or solvent-based polyurethane coating, one cannot exclude variations in the thickness of said coating when applied to the fabric. Hence, in order to assure the desired water impermeability of the end product, the latter is applied with a certain excess. The latter inevitably adds to the weight, stiffness and unpleasant tactile experience of the aforementioned mattress covers, and has a significant negative impact on the breath-ability of the covering material.

A major drawback of the aforementioned covering material is that the vapour permeability is insufficient to assure a proper ventilation of the mattress when intensely used, such as for example in hospitals or nursery homes. As a consequence these art known covering materials are uncomfortable to lie on due to accumulated heat, accumulated moisture, the relative low friction and thereby sliding of the bed sheets on the plastic film, and the unpleasant "plastic-like" feeling experienced when touching the material. A further drawback is the fact that these art known covering materials have no compressible or resilient properties, so that when a force is exerted on this material for a relatively long period of time by for example an object, a human being or an animal, the material generates insufficient pressure relief on this object, or this person or this animal, as a result of which there is a great risk for this person or this animal suffering pressure injuries, i.e. decubitus. A third drawback of the above-mentioned covering material is the fact that the aesthetic (appearance) of the material can only be changed to a limited degree, as the waterproof coating which is to be applied is limited to only one overall colour.

An even further drawback of this known covering material is the reduced use comfort when water, sweat or another liquid ends up on the coated side of the covering material, in particular when absorbed by the bed covering materials or sleep clothes. Due to the insufficient vapour permeability the liquids will remain on the covering material until they evaporate naturally or until they are physically removed from the material by means of, for example, a sponge or cloth.

One approach to address the drawbacks of these art known materials has been to provide the covering material with an additional fabric layer on top of the liquid-impermeable thermoplastic layer. Through this additional layer the problems associated with the aesthetic properties, low friction and plastic feeling can be solved, and in case this additional layer consists of a spacer fabric, such as for example described in WO 2009031028, or a quilt padded layer, such as for example described in US 2007/0199155, this further solves the problems associated with the accumulation of heat and moisture above the liquid-impermeable thermoplastic layer. In said covering materials liquid spillage will be absorbed and spread in the top fabric layer, but saturation is prevented due to the high air/vapour permeability of said fabric. As such, moisture and heat will be removed in a natural manner, without external intervention and without taking excessively long, so that this moisture and heat no longer bothers the user of the covering material.

However, in those cases where such covers are used to protect the mattresses of beds for patients who cannot get out of bed and need washing in bed, or of incontinent patients, it is required that liquid spillage can easily be removed and dried with papers or cloth. In addition, and particular when applied in situations involving prolonged immobility in bed *(supra)* it is desirable that the covers are durable and machine-washable at high temperatures, such as up to 65°C or more. In such instances the aforementioned solutions cannot be applied and it is accordingly desirable to have a covering material that allows easy removal of liquid spillage, and that are machine-washable at high temperatures but without the drawbacks of the art known materials mentioned hereinbefore.

In an effort to address the aforementioned problem and departing from the polyurethane coated mattress covers mentioned hereinbefore, the European patent EP 1719437 describes a solution wherein the aforementioned water or solvent based polyurethane, polyethylene, PVC, and the like ... coatings are combined with a covering that in itself repels moisture and accordingly prevents wetting of the fibres used to make said covering. The moisture repellence of the covering material is apparently an essential characteristic to assure that moisture from the body does not reach the support that remains substantially dry. Unfortunately the durability of the aforementioned treatment of the fibres does not add to desired durability and machine wash-ability at elevated temperatures of the end product.

It is accordingly an object of the present invention to provide covering materials for bedding articles that are moisture vapour permeable and liquid impermeable, and comprise a fabric that based on its intrinsic features, contributes to the functional characteristics of the covering material like, moisture vapour permeability, mechanical strength, machine wash-ability, texture perception upon touch and not the least flame resistance of the covering material.

### SUMMARY OF THE INVENTION

The present invention is directed to and provides the use of a covering material comprising: a moisture vapour permeable synthetic fibrous layer; and wherein a liquid impermeable but moisture vapour permeable film layer of thermoplastic composition is laminated onto an outer face of said fibrous layer; in particular the upper face; characterized in that the covering material weighs at least 200 g/m² and comprises the liquid impermeable but moisture vapour permeable film layer in an amount of about 2% to about 20% by weight; in a particular embodiment of about 5% to about 15% by weight; in a more particular embodiment of about 10%, 11%, 12%, 13%, 14% or 15% by weight.

In use of the covering material according to the invention, the moisture vapour permeable fibrous layer typically consists of a woven, knitted or non-woven fabric; in particular a woven or knitted fabric, such as for example Cambric®, including but not limited to a single knit including terry velour, double knit including double jersey knit, warp knit, and woven fabrics. In addition, and for example in case the moisture vapour permeable fibrous layer consists of a quilt-padded layer, said layer optionally comprises standard filler materials such as for example hollow polyester fibres.

As used herein the synthetic fibres used, are meant to include any of the standard yarn types used in the manufacturing of fabrics for applications on upholstered articles and mattresses, such as for example selected from the group consisting of polyethylene, polyesters, polypropylene, polyethylene terephtalate, polytrimethyl terephtalate and polyamides. In a particular embodiment the synthetic fibres are selected from polyesters, polypropylene or polyamides; more in particular from polyesters, and /or polypropylene.

As will be apparent to the skilled artisan, the synthetic fibre used in the covering material applied in accordance to the present invention is not limited to one single type of fibre but may be a blend of two, three, or more synthetic fibres, wherein the total amount of the synthetic moisture vapour permeable fibrous layer within the covering material of the present invention is from about 70% to about 98% by weight; in a particular embodiment and as exemplified hereinafter, from about 85% to about 95% by weight; more in particular from about 80% to about 90% by weight.

A particular aspect of the covering material used in accordance to the present invention, resides in thickness of the liquid impermeable but moisture vapour permeable film layer of thermoplastic composition. Compared to the art known materials this layer is extremely thin and accordingly does to a lesser extent interfere with the intrinsic properties of the moisture vapour permeable fibrous layer present within the covering materials as provided herein. As used herein, the water-impermeable layer has a thickness of between 0.1 and 40 µm. More particularly of between 5.0 and 30 µm and most particularly of between 10.0 and 25.0 µm.

Suitable thermoplastic polymers used in the manufacture of the covering material used in accordance to the present invention include polyurethanes, poly-ether-amides block copolymers, polyethylene-acrylic acid and polyethylene-methacrylic acid copolymers, polyethylene oxide and its copolymers, ethylene acrylic esters and ethylene methacrylic esters copolymers, poly lactide and copolymers, polyamides, polyesters and copolyesters, polyester block copolymers, sulfonated polyesters, poly-ether-ester block copolymers, poly-ether-ester-amide block copolymers, polyacrylates, polyacrylic acids and derivatives, ionomers, polyethylene-vinyl acetate with a vinyl acetate content of more than 28% by weight, polyvinyl alcohol and its copolymers, polyvinyl ethers and their copolymers, poly-2-ethyl-oxazoline and derivatives, polyvinyl pyrrolidone and its copolymers, thermoplastic cellulose derivatives, poly-caprolactone and copolymers, poly glycolide, polyglycolic acid and copolymers, polylactic acid and copolymers, polyureas, and mixtures thereof.

Particularly preferred thermoplastic polymers are thermoplastic poly-ether-amide block copolymers (e.g. Pebax(TM)), thermoplastic poly-ether-ester-amide block copolymers, thermoplastic polyester block copolymers (e.g. Hytrel(TM)), thermoplastic polyurethanes, typically non reactive polyurethanes (e.g. Estane(TM)), or mixtures thereof.

The water-impermeable films or layers made from the aforementioned thermoplastic polymers are not only extremely thin but also have high moisture vapour transmission rates (WVTR) that is preferably greater than 1250 g/m²/24h, measured using the ASTM-E96-66 standard at 37.8°C, and a water-impermeability, a.k.a. hydrostatic head (HH) of at least 5000 mm of water column, measured using the ISO 811 standard. In a particular embodiment the WVTR is greater than 3000 g/m²/24h, more particularly greater than 5000 g/m²/24h and most particularly the water vapour permeability of water-impermeable film is greater than 10 000 g/m²/24h. The water-impermeability or HH is in a preferred embodiment greater than 6000 mm, 7000 mm, 8000 mm, 9000 mm or even greater than 10.000 mm of water column. According to a further aspect of the present invention, and contribution superior in-use comfort, the water-impermeable film is characterized in having a resistance to water vapour (Rₑₜ) ≤ 20 m².Pa/W; in particular ≤ 15 m².Pa/W.

In a particular embodiment, the water-impermeable layer is a polyurethane, polyester or copolyamide layer that is laminated on a moisture vapour permeable fibrous knitted fabric comprising polypropylene; more in particular made of 100% polypropylene. In said embodiment the covering material weighs from between and about 200 g/m² to about 550 g/m²; in particular about 250 g/m². The water impermeable polyurethane, polyester or copolyamide layer has a thickness of between and about 5 to about 30 µm; in particular of between and about 10 to about 30 µm; more in particular of about 10, 15, 20 or 25 µm. The water impermeable layer has a HH greater than 7000 mm water column and a WVTR of about 2000 g/m²/24h (± 10%).

As already mentioned hereinbefore, given the low proportion of the water-impermeable layer in the composite covering material of the present invention, this layer does not influence the intrinsic feature of the moisture vapour permeable fibrous layer, and vice versa. As such the WVTR of the covering material used in accordance to_the present invention is greater than 1250 g/m²/24h, measured using the ASTM-E96-66 standard at 37.8°C, and has a HH of at least 5000 mm of water column, measured using the ISO 811 standard. In a particular embodiment the WVTR is greater than 3000 g/m²/24h, more particularly greater than 5000 g/m²/24h and most particularly the water vapour permeability of water-impermeable film is greater than 10 000 g/m²/24h. The water-impermeability or HH is in a preferred embodiment greater than 6000 mm, 7000 mm, 8000 mm, 9000 mm or even greater than 10.000 mm of water column.

As such the fibrous layer does to a lesser extent influence the intrinsic characteristics of the water-impermeable layer, but also the latter does not influence the intrinsic characteristics of the fibrous layer, such as machine washable at high temperatures. Accordingly, in a further aspect of the present invention, the use of the covering material in the aforementioned particular embodiment, in accordance with the present invention, is not only machine washable at high temperatures, but also intrinsically flame retardant. As is evident from the examples hereinafter, the use of the covering materials in accordance to the present invention pass the cigarette smouldering test (EN 597 part one), the small open flame test (EN 597 part two) and the CRIB 5 test (BS 6807:1996 Source 5: Pine wood crib size 5).

In view of the FR characteristics of the fabric of the present invention, this material when used in accordance to the present invention, can be used in end uses requiring FR finishes, such as for example furnishing/upholstery, and bedding. Consequently, in a further aspect the present invention provides the use of the covering material in any one of the aforementioned end uses and in particular as mattress covers, mattress protectors, or protector sheets for a mattress used by different users, such as in hospitals, hotels, nursery homes, hotels, rental houses, or home care.

These and other aspects of the present invention will become apparent to those skilled in the art after a reading of the following description of the preferred embodiment when considered with the drawings.

### DETAILED DESCRIPTION OF THE INVENTION

In the context of the present invention, "Mattress" means a ticking filled with a resilient material used alone or in combination with other products intended or promoted for sleeping upon.

This definition includes, but is not limited to, adult mattresses, youth mattresses, crib mattresses including portable crib mattresses, bunk bed mattresses, futons, water beds and air mattresses which contain upholstery material between the ticking and the mattress core, and any detachable mattresses used in any item of upholstered furniture such as convertible sofa bed mattresses, corner group mattresses, day bed mattresses, roll-a-way bed mattresses, high risers, and trundle bed mattresses.

The terms "breathable" and "breathability" are intended herein to correspond to "moisture vapour permeable" or "water vapour permeable", and "moisture vapour permeability" or "water vapour permeability". "Moisture vapour" and "water vapour" are also considered to be equivalent. Within the context of the present invention the breathability of the materials is determined as the water vapour transmission rates (WVTR), expressed as g/m²/24h, and measured using the ASTM-E96-66 standard at 37.8°C

In the event that any of these terms are conflicting in whole or in part, the broadest definition is intended to be used for the purposes of this application for the present invention.

The present invention provides exemplary covering materials to be used in accordance to the present invention, to protect mattresses, particularly bed mattresses, but also pillows, cushions, duvets, or upholstery from contaminants, e.g. liquids or bodily fluids, but also to stains, dust, allergens, and micro-organisms. Different from the art know covering materials, the use of the mattress covers in accordance to the present invention provide a superior in-use comfort, i.e. by being breathable or water vapour permeable (no sweat), by producing a low noise in use, and by providing a softness sensation to the user; and a superior ease of use, i.e. by a high mechanical strength so as to allow reuse and high temperature laundering. As exemplified in the examples hereinafter, a good standard to judge the breath ability and water vapour permeability of the covering material according to the present invention, is the ISO Norm 11 092 (1993) - EN 31 092. In this test, the resistance to water vapour of the material is calculated from the measured heat flux required to hold a heated plate at a constant temperature of 35 °. The result (Rₑₜ) is expressed in m².Pa/W. Based upon the international classification proposed by the CEN TC 248/WG9, textile products with an Rₑₜ-value ≤ 20 are considered very good and comfortable to the user. The exemplary covering materials of the present invention are characterized in having an Rₑₜ-value ≤ 20.

The covering material for use in bedding articles in accordance to the present invention consists in a laminate of different layers comprising at least a first moisture vapour permeable layer and a second liquid impermeable but moisture vapour permeable film layer of thermoplastic composition bonded, i.e. laminated onto an outer face of said first layer; in particular the upper face of said moisture vapour permeable layer. Such moisture vapour permeable materials include, but are not limited to: fibres, fibrous batts, non-wovens, wovens, papers, knits, etc. The moisture vapour permeable fibrous layer typically consists of a woven, or knitted fabric; including but not limited to a single knit including terry velour, double knit including double jersey knit, warp knit, and woven fabrics, such as Cambric®.

By way of example and not limiting the invention, the outside or technical face of the moisture vapour permeable fabric may comprise standard yarn types used to decorate the face of the fabric, and characterized in having the synthetic composition as described hereinbefore. In addition, and for example in case the moisture vapour permeable fibrous layer consists of a quilt-padded layer, said layer optionally comprises standard filler materials, such as textured polyester, hollow polyesters fibres, nylon yarns or other similar yarns and the inside layer is comprised of standard materials. In other words, any synthetic woven, or knitted fabric from the collection of fabrics can be incorporated in the covering material according to the present invention, as long as at the outside layer is laminated with a liquid impermeable but moisture vapour permeable film of thermoplastic composition, characterized in that the composite covering material weighs at least 200 g/m² and comprises the liquid impermeable but moisture vapour permeable film layer in an amount of about 2% to about 20% by weight; in a particular embodiment of about 5% to about 15% by weight; in a more particular embodiment of about 10%, 11%, 12%, 13%, 14% or 15% by weight.

Since in use the liquid impermeable film is actually integrated with and attached structurally to the other layer of the moisture vapour permeable fabric, the present invention provides more aesthetically pleasing fabrics that feel virtually the same as fabrics that do not contain the aforementioned water-impermeable film.

As such, the presence of the water-impermeable film does to a lesser extent interfere with the technical characteristics of the fibrous layer, that not only allows the covering material to be washed at high temperatures (from 65 - 95°C), but also provides an intrinsic flame resistance to the covering materials of the present invention.

Flame or fire retardance or resistance is provided entirely by the combination of the water vapour permeable fabric and the water-impermeable film of the present invention. Any resistance of the encased article of upholstered furniture seating, mattresses or other cushioned articles to ignition after exposure to an open flame is provided entirely by the covering material itself. Thus testing of an article enclosed or covered with a fabric used in accordance to the present invention will provide test results associated directly and exclusively with the fabric itself, such as testing in accordance with the cigarette smouldering test (EN 597 part one), the small open flame test (EN 597 part two) and the CRIB 5 test (BS 6807:1996 Source 5: Pine wood crib size 5). Test protocols of each of these standards are widely available and the entire contents of each test method are incorporated herein by reference.

The yarns used to create the water vapour permeable fabrics used in the present invention are selected from all available yarn formation techniques and are not limited in size or formation. Yarns may be ring, openend, worsted, airjet, vortex, or any other technique of spinning staple yarns, these yarns may be used by themselves or in addition to flat or textured filament yarns or combined using techniques of plied, plated, corespun, alternated, or any other yarn spinning technique that could be used to combine fibers. As already mentioned hereinbefore, the exemplary fabric can be any of a woven, non-woven or knitted fabric, but in order to achieve the above objectives the fabric must have an area density of at least 200 g/m²; in particular from between and about 200 g/m² to about 550 g/m²; more in particular about 250 g/m².

The water-impermeable film used in the application of the covering material according to the present invention is typically made from thermoplastic polymers selected from the group consisting of thermoplastic poly-ether-amide block copolymers (e.g. Pebax(TM)), thermoplastic poly-ether-ester-amide block copolymers, thermoplastic polyester block copolymers (e.g. Hytrel(TM)), thermoplastic polyurethanes, typically non reactive polyurethanes (e.g. Estane(TM)), or mixtures thereof. Those of skill in the art can readily determine an appropriate set of reaction conditions to couple the thermoplastic agent(s) to the fibrous substrate.

Typically, a hotmelt adhesive is used for bonding the water-impermeable film to the moisture vapour permeable fabric layer. The hotmelt is preferably applied by dot coating to the article to be laminated, for example from about 15 g/m² to about 40 g/m², in particular from about 20 g/m² to about 30 g/m² using a gravure roller at the desired temperature.

In a particular embodiment, the hotmelt is a moisture curing polyurethane hotmelt adhesive, such as for example the commercially available Vertex TL5601 of Fulller; Jowa-Therm 68710 of Jowat; or PUR-FECT 375B of Henkel, applied by dot coating at about 18 g/m², using a gravure roller at an elevated temperature, such as for example at about 120 °C or according to the manufacturer conditions. The hotmelt is either applied to the water-impermeable film or to the moisture vapour permeable fabric layer, preferably to the moisture vapour permeable fabric layer. Subsequently the second layer, i.e. either to the water-impermeable film or the moisture vapour permeable fabric layer, preferably the water-impermeable film, is pressed onto the still "molten and sticky" (uncured) hotmelt using a calendering roll with controlled pressure. Curing is achieved at room temperature and the laminated material can be further processed after 6 to 8 hours, with full curing being achieved within 5 to 7 days.

It is accordingly a further aspect of the present invention to provide an exemplary method for manufacturing a covering material to be used in accordance to the present invention said method comprising;
- applying a hotmelt onto a moisture vapour permeable synthetic fibrous layer in an amount of about 15 g/m² to about 30 g/m²;
- pressing a liquid impermeable but moisture vapour permeable film layer onto the still molten and sticky hotmelt; and
- cure the laminated material at room temperature for at least 6 hours.

In the aforementioned method the hotmelt is preferably applied by dot coating, i.e. using a gravure roller at the melt temperature of the hotmelt used. Any art known gravure roller may be used, but in a particular embodiment of the present invention it results in a hotmelt coverage of between and about 25 to about 60%; more in particular between and about 30% to about 40%. The gravure roller preferably has a mesh of between and about 15 to about 30; more in particular between and about 10 to about 20, alternatively having between and about 40 to about 75 points/cm²; more in particular about 40 or about 70 points/cm². In a further example_the gravure roller consists of a blunt pyramid roller with a division of 10 mm, Web 70 µm, and Depth of 330 µm with an overall volume of 110 ml/m².

In the aforementioned exemplary manufacturing method, the liquid impermeable but moisture vapour permeable film layer is preferably applied using a calendering roll with controlled pressure.

The invention will be better understood with reference to the following non-limiting examples, the examples are for the purpose of describing a preferred embodiment of the invention and are not intended to limit the invention thereto.

### EXAMPLES

EXAMPLE 1: Type 4 - Cambric® + PUR lamination
- the moisture vapour permeable synthetic fibrous layer (1) : a 100% polypropylene (PP) knit, i.e. Cambric® with a weight of about 200 g/m² (± 5%)
- the liquid impermeable but moisture vapour permeable film layer (2): a crosslinked polyurethane film having a thickness of 15 µm which is laminated to the first layer (1) by means of a hotmelt dot coating (spot-bonding).

Properties:
**total weight** of the covering material: 240 g/m²;
**water-impermeability:** > 7000 mm of water column (ISO 811);
**water vapour permeability:** > 2 000 g/m²/24h (ASTM-E96-66 at 37.8°C)
**Washable:** up to 65°C (ISO 6330)
**Shrinkage:** no permanent shrinkage after washing at 65°C
**Tensile Strength:** length : 1000 N / width: 400 N (ISO 13934 part one)
**Elongation at break:** length : 50% / width: 150% (ISO 13934 part one)
**Elongation at 20N:** length : 10% / width: 60% (ISO 13934 part one)
**Burning behaviour:**
   - Cigarette (inherent property) - (passed EN 597 part one)
   - Match (inherent property) - (passed EN 597 part one)
   - CRIB 5 (inherent property) - (passed BS 6807 crib 5)

### EXAMPLE 2: DETERMINATION OF THE WATER VAPOUR RESISTANCE

The results hereinafter provide a direct comparison of the water vapour resistance of the Cambric® + PUR laminated material of example 1 (hereinafter referred to as Mattress Cover 1) with an art known aqueous or solvent-based polyurethane coated mattress cover (hereinafter referred to as Mattress Cover 2).

### Method:

Both material were tested according to ISO Norm 11 092 (1993) - EN 31 092, briefly;

The analysis is performed on the "Sweating Guarded Hotplate M259B-3" of the brand SDLAtlas. An electrically heated porous plate is kept at at a constant temperature of 35 ° C. The heated plate is covered with a water impermeable, and moisture vapour permeable membrane. The heated plate is filled with water that evaporates and migrates through the membrane. A parallel air stream conditioned at 35 ° C and a relative humidity of 40% is sent over the plate.

The test sample is put on the plate, in the present configuration with the film or coated layer towards the plate. The resistance to water vapour of the sample is calculated from the measured heat flux required to hold the heated plate at a constant temperature of 35 °. The result (Rₑₜ) is expressed in m².Pa/W. Conditioning was measured during at least 12 hours.

| Results: | |
|---|---|
| **Material** | **<Rₑₜ> (m².PA/W)** |
| Cover 1 | 10,54 |
| Cover 2 | 91,94 |

Compared to the art known material, the covering material of the present invention has a water vapour resistance that is almost 10 times lower. According to the classification proposed by the CEN TC 248/WG9 a Rₑₜ value lower than 20 m².PA/W is considered very good and comfortable to the user.

## Claims

1. Use of a covering material comprising: a moisture vapour permeable synthetic fibrous layer; and a liquid impermeable but moisture vapour permeable film layer of thermoplastic composition **characterized in that** the covering material weighs at least 200 g/m² and comprises the liquid impermeable but moisture vapour permeable film layer in an amount of about 2% to about 15% by weight, and wherein the liquid impermeable but moisture vapour permeable film layer is integrated with and attached structurally to the upper face of said fibrous layer to protect mattresses, particularly bed mattresses, but also pillows, cushions, duvets, or upholstery from contaminants.

2. Use according to claim 1, wherein the synthetic fibrous layer consists of a woven, knitted or non-woven fabric; in particular a woven or knitted fabric.

3. Use according to claims 1 or 2, wherein the synthetic fibrous layer comprises synthetic fibres selected from the group consisting of polyethylene, polyesters, polypropylene, polyethylene terephtalate, polytrimethyl terephtalate and polyamides; in particular polypropylene.

4. Use according to any one of claims 1 to 4, wherein the total amount of the synthetic moisture vapour permeable fibrous layer within the covering material of the present invention is from about 85% to about 98% by weight.

5. Use according to any one of the aforementioned claims, wherein the water-impermeable layer has a thickness of between 0.1 and 40 µm; in particular of between 10.0 and 25.0 µm.

6. Use according to any one of the aforementioned claims wherein the water-impermeable film is made from thermoplastic polymers selected from the group consisting of thermoplastic poly-ether-amide block copolymers (e.g. Pebax(TM)), thermoplastic polyester polymers, polyamides, thermoplastic poly-ether-ester-amide block copolymers, thermoplastic polyester block copolymers (e.g. Hytrel(TM)), thermoplastic polyurethanes, typically non reactive polyurethanes (e.g. Estane(TM)), or mixtures thereof.

7. Use according to any one of the aforementioned claims having a moisture vapour transmission rate (WVTR) that is greater than 1250 g/m²/24h; in particular greater than 3000 g/m²/24h.

8. Use according to claim 7, wherein the WVTR of the water-impermeable film is greater than 10000 g/m²/24h.

9. Use according to any one of the aforementioned claims having a resistance to water vapour (Rₑₜ) ≤ 20 m².Pa/W.

10. Use according to any one of the aforementioned claims wherein the water-impermeable film has a hydrostatic head (HH) of at least 5000 mm of water column.

11. Use according to any one of the aforementioned claims wherein the water-impermeable film has a resistance to water vapour (Rₑₜ) ≤ 20 m².Pa/W; in particular ≤ 15 m².Pa/W.

12. Use according to any one of the aforementioned claims wherein the composite material weighs from between and about 200 g/m² to about 550 g/m²; in particular about 250 g/m².

13. Use according to any one of the aforementioned claims wherein the composite material has a moisture vapour transmission rate (WVTR) that is greater than 1250 g/m²/24h; in particular greater than 2000 g/m²/24h; more in particular greater than 5000 g/m²/24h; even more in particular the water vapour permeability of water-impermeable film is greater than 10 000 g/m²/24h.

14. Use according to any one of the aforementioned claims wherein the composite material has a HH of at least 5000 mm of water column; in a preferred embodiment greater than 6000 mm, 7000 mm, 8000 mm, 9000 mm or even greater than 10.000 mm of water column.

15. Use according to claim 1, wherein;
- the water-impermeable layer is a polyurethane or polyester or co-polyamide layer that is laminated on a moisture vapour permeable fibrous fabric, in particular comprising polypropylene, more in particular made of polypropylene;
- the covering material weighs from between and about 200 g/m² to about 550 g/m²; in particular about 250 g/m²;
- the water impermeable polyurethane or polyester, or co-polyamide layer has a thickness of between and about 5 to about 30 µm; in particular of between and about 10 to about 30 µm;
- the water impermeable layer has a HH greater than 7000 mm water column; and
- the covering material has a WVTR of at least 2000 g/m²/24h (± 10%).

16. Use according to any one of claims 1 to 15 wherein the thermoplastic composition is laminated onto an outer face of said fibrous layer by dot coating.

17. Use according to claim 15, wherein the dot coating is applied at between and about 10 to about 20, alternatively at between and about 40 to about 75 points/cm²

18. Use according to any one of the aforementioned claims with the covering material in the form of mattress covers, mattress protectors or protector sheets for mattress used by different users, such as in hospitals, hotels, nursery homes, hotels, rental houses, or home care.

## Patentansprüche

1. Verwendung eines Abdeckmaterials, welches folgendes beinhaltet: eine für Wasserdampf durchlässige, synthetisch-faserige Folie und eine flüssigkeitsundurchlässige aber wasserdampfdurchlässig Folie aus thermoplastischer Zusammensetzung, die **dadurch gekennzeichnet ist, dass** das Abdeckmaterial mindestens 200 g/m² wiegt und die flüssigkeitsundurchlässige aber wasserdampfdurchlässige Folie einen Anteil von etwa 2% bis etwa 15% des Gewichts ausmacht, und in die die flüssigkeitsundurchlässige aber wasserdampfdurchlässig Folie mit integriert und strukturell mit der oberen Fläche der Faserschicht befestigt ist, um Matratzen, insbesondere Bettmatratzen, aber auch Kissen, Decken, oder Polster vor Verunreinigungen zu schützen.

2. Verwendung nach Anspruch 1, wobei die synthetische Faserschicht aus einem gewobenen, gestrickten oder Fliesstoff besteht; insbesondere aber aus einem Gewebe oder Gewirke besteht.

3. Verwendung nach den Ansprüchen 1 oder 2, wobei die synthetische Faserschicht aus synthetischen Fasern aus Gruppen ausgewählt wird, die Polyethylen, Polyester, Polypropylen, Polyethylenterephthalat, polytrimethyl Terephtalat und Polyamide, insbesondere Polypropylen enthält.

4. Verwendung nach jedem der Ansprüche 1 bis 4, wobei der Anteil am Gewicht der synthetischen, feuchtigkeitsdampfdurchlässigen Faserschicht im Abdeckmaterial der vorliegenden Erfindung etwa 85% bis etwa 98% beträgt.

5. Verwendung nach einem der vorgenannten Ansprüche, wobei die wasserundurchlässige Schicht eine Dicke zwischen 0,1 und 40 µm, insbesondere zwischen 10,0 und 25,0 µm aufweist.

6. Verwendung nach einem der vorgenannten Ansprüche, wobei die wasserundurchlässige Folie aus thermoplastischen Polymeren aus der Gruppe der thermoplastischen Poly-Ether-Amid-Blockcopolymere (z. B. Pebax (TM)), thermoplastischen Polyester-Polymere, Polyamide, thermoplastische Polyester, -Ether-Ester-Amid-Blockcopolymeren, thermoplastischen Polyester-BlockCopolymere (z. B. Hytrel (TM)), thermoplastische Polyurethane, typischerweise nicht reaktiven Polyurethane (z. B. Estane (TM)), oder Mischungen davon ausgewählt wurde.

7. Verwendung nach einem der vorgenannten Ansprüche mit einer Wasserdampfdurchlässigkeit (WVTR), die größer als 1250 g/m²/24h ist, insbesondere größer 3000 g/m²/24h.

8. Verwendung nach Anspruch 7, wobei die WVTR des wasserundurchlässigen Films größer als 10000 g/m²/24h ist.

9. Verwendung nach einem der vorgenannten Ansprüche mit einer Resistenz gegen Wasserdampf von (Ret) ≤ 20 m².Pa/W.

10. Verwendung nach einem der vorgenannten Ansprüche, wobei der wasserundurchlässige Film einen hydrostatischen Kopf (HH) von mindestens 5000 mm Wassersäule hat.

11. Verwendung nach einem der vorgenannten Ansprüche, wobei der wasserundurchlässige Film einen Wasserdampfdiffusionswiderstand von (Ret) ≤ 20 m².Pa/W, insbesondere ≤ 15 m².Pa/W ausweist.

12. Verwendung nach einem der vorgenannten Ansprüche, wobei das Verbundmaterial zwischen etwa 200 g/m² bis etwa 550 g/m², insbesondere etwa 250 g/m² wiegt.

13. Verwendung nach einem der vorgenannten Ansprüche, wobei der Verbundwerkstoff eine Wasserdampfdurchlässigkeit (WVTR) aufweist, die größer als 1250 g/m²/24h ist, insbesondere größer als 2000 g/m²/24h, darüber hinaus noch größer als 5000 g/m²/24h, und vor allem für spezielle Fälle, bei denen die Wasserdampfdurchlässigkeit der wasserundurchlässigen Folie größer als 10 000 g/m²/24h ist.

14. Verwendung nach einem der vorgenannten Ansprüche, wobei das Verbundmaterial eine HH von mindestens 5000 mm Wassersäule hat; in bevorzugten Ausführungsformen höher als 6000 mm, 7000 mm, 8000 mm, 9000 mm oder sogar größer als 10.000 mm Wassersäule beträgt.

15. Verwendung nach Anspruch 1, wobei:
- Die wasserundurchlässige Polyurethan- oder Polyester-oder Co-Polyamid-Schicht, die auf einem laminierten feuchtigkeitsdampfdurchlässigen Fasergewebe laminiert ist, insbesondere Polypropylen enthält und insbesondere aus Polypropylen hergestellt ist;
- Das Abdeckmaterial zwischen etwa 200 g/m² bis etwa 550 g/m² wiegt, insbesondere etwa 250 g/m²;
- Die wasserundurchlässige Polyurethan- oder Polyester-oder Co-Polyamid-Schicht eine Dicke zwischen etwa 5 und etwa 30 µm besitzt, insbesondere zwischen etwa 10 und etwa 30 µm;
- Die wasserundurchlässige Schicht eine HH größer als 7000 mm Wassersäule hat; und
- Das Abdeckmaterial eine WVTR von wenigstens 2000 g/m²/24h (± 10%) besitzt.

16. Verwendung nach einem der Ansprüche 1 bis 15, wobei die thermoplastische Zusammensetzung auf eine äußere Fläche der Faserschicht mittels einer Punkt-Beschichtung laminiert ist.

17. Verwendung gemäß Anspruch 15, wobei die Punkt-Beschichtung zwischen etwa 10 und etwa 20, alternativ dazu mit etwa 40 bis etwa 75 Punkten/cm² gekennzeichnet ist.

18. Verwendung nach einem der vorgenannten Ansprüche mit Abdeckmaterial in Form von Matratzenbezügen, Matratzenschoner oder Schutzüberzügen für Matratzen, wie sie von verschiedenen Benutzern verwendet werden, wie z.B. in Krankenhäusern, Hotels, Pflegeheimen, Vermietung von Häusern, oder bei häuslicher Pflege.

## Revendications

1. Utilisation d'un matériau de revêtement comprenant :
une couche fibreuse synthétique perméable à la vapeur ;
et une couche de film imperméable aux liquides, mais perméable à la vapeur d'eau de composition thermoplastique **caractérisée en ce que** le matériau de recouvrement pèse au moins 200 g/m² et comprend le film couche imperméable aux liquides, mais perméable à la vapeur d'eau d'environ 2 % à 15 % en poids, et où la couche de film imperméable, mais perméable à la vapeur d'eau est intégrée et fixée structurellement à la face supérieure de ladite couche fibreuse, pour protéger les matelas, en particulier les matelas de lits, mais également les oreillers, les coussins, les couettes, ou les rembourrages, des agents contaminants.

2. Utilisation selon la revendication 1, où la couche fibreuse synthétique consiste en un tissu tissé, tricoté ou non tissé.

3. Utilisation selon les revendications 1 ou 2, où la couche fibreuse synthétique comprend des fibres synthétiques sélectionnées dans le groupe des polyéthylènes, polyesters, polyéthylène, téréphtalate de polyéthylène, téréphtalate polytriméthyle et les polyamides ; en particulier le polypropylène.

4. Utilisation selon les revendications 1 à 4, où le la quantité totale de couches fibreuses perméables à la vapeur d'eau dans le matériau de recouvrement de l'invention présente est d'environ 85 % à 98 % en poids.

5. Utilisation selon n'importe laquelle des revendications mentionnées ci-dessus, où la couche imperméable à l'eau a une épaisseur entre 0.1 et 40 µm ; en particulier entre 10.0 et 25.0 µm.

6. Utilisation selon n'importe laquelle des revendications mentionnées ci-dessus où le film imperméable à l'eau est fait de polymères thermoplastiques sélectionnés dans le groupe de copolymères poly (éther-bloc-amide) thermoplastiques (par exemple, Pebax(TM)), des polymères en polyester thermoplastiques, en polyamides, des copolymères poly (éther-bloc-amide) thermoplastiques, des copolymères séquencés de polyester thermoplastique (par exemple Hytrel(TM)), des polyuréthanes thermoplastiques, des polyuréthanes généralement non réactifs (par exemple Estane(TM)), ou des mélanges.

7. Utilisation selon n'importe laquelle des revendications mentionnées ci-dessus ayant une vitesse de transmission de vapeur d'eau (WVTR) qui est supérieure à 1250 g/m²/24h ; en particulier supérieure à 3000 g/m²/24h.

8. Utilisation selon la revendication 7, où la WVTR du film imperméable à l'eau est supérieure à 10000 g/m²/24h.

9. Utilisation selon n'importe laquelle des revendications mentionnées ayant une résistance à la vapeur d'eau (Rₑₜ) ≤ 20m².Pa/W.

10. Utilisation selon n'importe laquelle des revendications mentionnées ci-dessus où le film imperméable possède une tête hydrostatique (HH) d'au moins 5000 mm de colonne d'eau.

11. Utilisation selon n'importe laquelle des revendications mentionnées ci-dessus où le film imperméable à l'eau résiste à la vapeur d'eau (Rₑₜ) ≤ 20m².Pa/W ; en particulier ≤ 15 m².Pa/W.

12. Utilisation selon n'importe laquelle des revendications mentionnées où le matériau composite pèse entre 200 g/m² à environ 550 g/m² ; en particulier environ 250 g/m².

13. Utilisation selon n'importe laquelle des revendications mentionnées ci-dessus où le matériau composite a une vitesse de transmission de la vapeur d'eau (WVTR) supérieure à 1250 g/m²/24h ; en particulier supérieure à 2000 g/m²/24h ; plus encore supérieure à 5000 g/m²/24h ; plus particulièrement la perméabilité de la vapeur d'eau du film imperméable à l'eau qui est supérieure à 10 000 g/m²/24h.

14. Utilisation selon n'importe laquelle des revendications mentionnées ci-dessus où le matériau composite a une HH (tête hydrostatique) d'au moins 5000 mm de colonne d'eau ; dans un mode de réalisation préféré supérieur à 6000 mm, 7000 mm, 8000 mm, 9000 mm ou même supérieur à 10.000 mm de colonne d'eau.

15. Utilisation selon la revendication 1, où;
- la couche imperméable à l'eau est une couche de polyuréthane ou de polyester ou une couche de copolyamide qui est laminée sur un tissu fibreux perméable à la vapeur d'eau , en particulier comprenant du polypropylène, plus particulièrement en polypropylène;
- le matériau de recouvrement pèse entre 200 g/m² et environ 550 g/m² ; particulièrement environ 250 g/m²;
- le polyuréthane imperméable à l'eau ou du polyester, ou une couche de copolyamide avec une épaisseur d'environ entre 5 à environ 30 µm; particulièrement entre 10 à 30 µm;
- la couche imperméable d'eau a une HH (tête hydrostatique) supérieure à 7000 mm de colonne d'eau; et
- le matériau de recouvrement a une WVTR d'au moins 2000 g/m²/24h (± 10 %).

16. Utilisation selon n'importe laquelle des revendications 1 à 15 où la composition thermoplastique est laminée sur la face extérieure de ladite couche fibreuse par un enduit moucheté.

17. Utilisation selon la revendication 15, où l'enduit moucheté est appliqué entre environ 10 à 20, alternativement entre 40 à environ 75 points/cm²

18. Utilisation selon n'importe laquelle des revendications mentionnées ci-dessus avec le matériau de recouvrement sous la forme de couvre-matelas , de protège-matelas ou des feuilles de protection pour matelas utilisés par différents utilisateurs, comme les hôpitaux, les hôtels , les garderies ,les logements locatifs, ou dans les soins à domicile.
